# FASCICULE DE BREVET EUROPEEN

(11) **EP 1 240 039 B1**
(45) Date de publication et mention de la délivrance du brevet: **23.11.2005**
(21) Numéro de dépôt: 00988932.0
(22) Date de dépôt: 15.12.2000
(51) Int. Cl.: B60G 21/05

(54) **ESSIEU ARRIERE COMPORTANT UNE TRAVERSE ECHANCREE**
HINTERACHSE MIT EINEM GESCHWEIFTEN QUERTRÄGER
REAR AXLE COMPRISING AN OPEN-END CROSS MEMBER

(30) Priorité: 21.12.1999 FR 9916185
(43) Date de publication de la demande: 18.09.2002
(73) Titulaire: Renault s.a.s., 92100 Boulogne Billancourt (FR)
(72) Inventeur: RODRIGUEZ, Fernando, F-75016 Paris (FR); ROYER, Christine, F-92380 Garches (FR); KLEIN, Stéphane, F-78170 La Celle Saint Cloud (FR)
(74) Mandataire: Srour, Elie
(86) Numéro de dépôt international: PCT/FR2000/003554
(87) Numéro de publication internationale: WO 2001/045970

(56) Documents cités:
- EP-A- 0 430 728
- EP-A- 0 552 537
- DE-A- 19 720 133
- DE-A- 19 808 172
- FR-A- 2 745 240
- US-A- 4 700 796
- US-A- 5 597 175
- PATENT ABSTRACTS OF JAPAN vol. 018, no. 620 (M-1711), 25 novembre 1994 (1994-11-25) & JP 06 239121 A (SUZUKI MOTOR CORP), 30 août 1994 (1994-08-30)
- PATENT ABSTRACTS OF JAPAN vol. 007, no. 193 (M-238), 24 août 1983 (1983-08-24) & JP 58 093616 A (TOYO KOGYO KK), 3 juin 1983 (1983-06-03)

## Description

L'invention concerne un essieu, notamment arrière, pour véhicule automobile, comme il est connu du document EP 0 430 728 A, qui forme l'état de la technique le plus proche selon le preambule de la revendication 1.

L'invention concerne plus particulièrement un essieu, notamment arrière, pour véhicule automobile, du type qui comporte au moins deux bras sensiblement longitudinaux qui sont articulés autour d'un axe transversal par rapport à un élément de structure de caisse du véhicule, du type dans lequel les bras sont reliés l'un à l'autre par une traverse transversale qui est fixée aux bras à ses extrémités et qui présente des caractéristiques de raideur élevées en flexion et réduites en torsion, du type dans lequel la traverse est formée de deux ailes réunies sensiblement, en section longitudinale, sous la forme d'un U.

On connaît de nombreux types d'essieux arrière de véhicules automobiles.

De nombreux des essieux arrière sont des essieux arrière de type "essieux tirés" qui comportent deux bras longitudinaux qui sont articulés à l'avant par des paliers d'un axe transversal par rapport à une caisse du véhicule, et qui sont reliés l'un à l'autre par une traverse transversale de torsion qui comporte deux plaques ou ailes réunies par une arête commune, et qui, en section longitudinale, présente ainsi sensiblement la forme d'un U ou d'un V.

Selon une première conception connue, la liaison de cette traverse transversale, conventionnellement rectiligne, avec les bras est réalisée par soudage et nécessite, dans un but de renforcement de l'essieu, des équerres de renfort planes triangulaires, aussi appelées "goussets", qui sont agencées dans un plan général commun des bras et de la traverse, et qui sont soudées à la traverse et aux bras de l'essieu.

Cette conception présente l'inconvénient d'imposer, lors du processus de fabrication, de sévères tolérances de positionnement de la traverse, des bras et des goussets de l'essieu les uns par rapport aux autres, ce qui a pour conséquence un coût de fabrication élevé de l'essieu.

Pour remédier à cet inconvénient, on a, selon une deuxième conception connue, proposé de remplacer les goussets de renfort et la traverse conventionnellement rectiligne par une traverse qui présente une forme évasée dans sa zone de jonction avec les bras. Une telle traverse présente une section qui est plus grande suivant la direction longitudinale au voisinage des bras qu'en son milieu.

Cette conception permet de se dispenser d'ajouter des goussets de renfort, et revient à disposer d'un essieu dont les goussets de renfort sont intégrés à la traverse.

Toutefois, on a constaté que les sections de la traverse soumises à une sollicitation de torsion ne restent pas droites mais se gauchissent. Ce phénomène est particulièrement sensible à proximité des liaisons entre la traverse et le bras compte tenu de l'augmentation de la dimension longitudinale des ailes de la section. Le gauchissement des sections concernées provoque l'apparition d'effort très importants au niveau des liaisons entre la traverse et les bras qui est hautement préjudiciable à leur résistance à fatigue et peut entraîner une rupture desdites liaisons.

Pour remédier à cet inconvénient, l'invention propose un essieu comportant une traverse dont la forme permet l'annulation des contraintes de fatigue.

Dans ce but, l'invention propose un essieu du type décrit précédemment, caractérisé en ce que chaque aile de la traverse comporte un bord libre qui, à chaque extrémité de la traverse, est échancré suivant un arc qui est tangent à la direction générale transversale de la traverse et qui est tangent à la direction générale longitudinale du bras associé de façon à réduire localement la dimension longitudinale de la branche du U et à créer ainsi une zone de raccordement dans laquelle les contraintes de gauchissement s'annulent.

Selon d'autres caractéristiques de l'invention:
- le bord libre de chaque aile de la traverse est de surcroît recourbé par rapport au plan de chaque aile,
- le bord libre de chaque aile est recourbé vers l'extérieur de la traverse en U,
- le bord libre de chaque aile est recourbé vers l'intérieur de la traverse en U,
- lors de la fabrication de la traverse, le bord libre de chaque aile est soumis à un traitement par grenaillage pour améliorer les caractéristiques de tenue en fatigue de la traverse,
- lors de la fabrication de la traverse, le bord libre de chaque aile est soumis à un traitement par écrouissage, notamment par galetage; pour améliorer les caractéristiques de tenue en fatigue de la traverse,
- la traverse est évasée à chacune de ses extrémités, chaque branche du U de ses ailes étant de longueur croissante, du milieu de la traverse jusqu'à la zone de raccordement de chacune de ses extrémités,
- la traverse est réalisée à partir d'un tronçon d'un profilé,
- lors de la fabrication de la traverse, le profilé est déformé à froid pour réaliser les évasements, et/ou les échancrures et/ou les bords recourbés de ses ailes,
- la traverse est soudée sur les bras,
- la traverse est assemblée aux bras par l'intermédiaire de points d'ancrage démontables.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un essieu arrière de véhicule automobile,
- la figure 2 est une vue locale en perspective d'une traverse selon l'état de la technique et des sollicitations de gauchissement qui s'y exercent,
- la figure 3 est une vue en perspective d'une traverse selon l'invention,
- la figure 4 est une vue plane en élévation d'un demi-essieu comportant une traverse selon l'invention,
- la figure 5 est une vue en coupe suivant la ligne 5-5 de la figure 4 de la liaison de la traverse au bras,
- les figures 6 et 7 sont des vues en coupe suivant les lignes 6-6 et 7-7 de la figure 4 de sections d'extrémité et médiane de la traverse selon un premier mode de réalisation de l'invention, et
- la figures 8 est une vue en coupe par un plan longitudinal d'une section d'extrémité de la traverse selon un second mode de réalisation de l'invention,

Dans la description qui va suivre, des chiffres de référence identiques désignent des pièces identiques ou ayant des fonctions similaires.

On utilisera à titre non limitatif, et en référence aux figures, les termes longitudinal, transversal, vertical, avant et arrière.

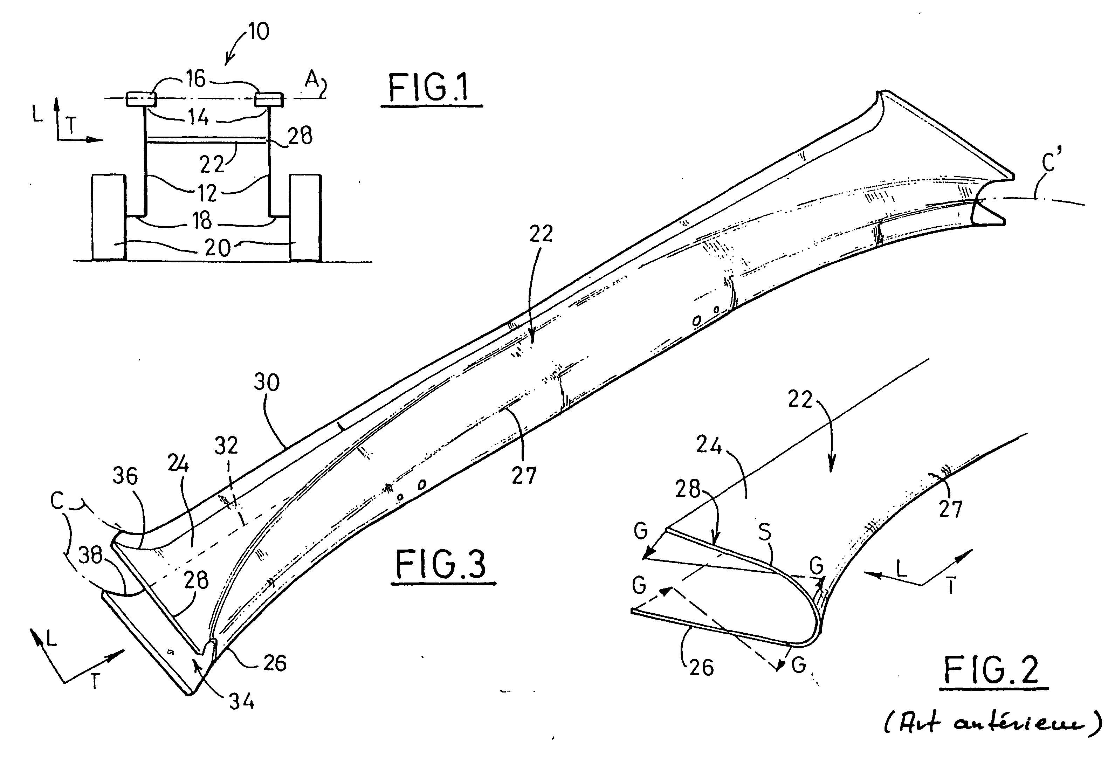

On a représenté schématiquement à la figure 1 un essieu 10, notamment arrière, pour un véhicule automobiles.

L'essieu 10 représenté est un essieu de type "essieux tirés" qui comporte deux bras 12 sensiblement longitudinaux de direction L qui sont articulés à des extrémités 14 avant par des pivots 16 d'axe A transversal liés à un élément (non représenté) de structure de caisse du véhicule, et dont des extrémités 18 arrières portent des moyeux de roues 20 du véhicule.

L'essieu 10 comporte une traverse 22 sensiblement transversale, parallèle à la direction transversale T, qui est liée par ses extrémités 28 à chacun des bras 12. La traverse 22 est rigide en flexion mais est sensiblement élastique en torsion autour de sa direction transversale de façon à permettre un léger mouvement relatif en rotation autour de l'axe A de chaque bras 12 par rapport à l'autre.

De manière connue, une telle traverse 22 peut être réalisée sous la forme d'un tronçon de profilé qui, en section dans un plan longitudinal du véhicule, présente sensiblement la forme d'un U ou d'un V.

Sur les figures suivantes, et de façon non limitative de l'invention, on a représenté une traverse 22 dont la section présente la forme d'un U. La traverse 22 comporte deux ailes 24 et 26 qui sont réunies par une arête 27 transversale commune. Comme illustré à la figure 2, chaque aile 24 ou 26 est agencée suivant une branche du U du tronçon de profilé précédemment décrit.

De manière connue, la traverse 22 représentée à la figure 1 est soudée à chacune de ses extrémités 28 sur le bras 12 correspondant. Comme illustré à la figure 3, pour assurer une résistance optimale de la liaison de la traverse 22 au bras 12 correspondants, la traverse 22 présente, dans le plan général commun aux bras 12 et à la traverse 22, une forme évasée qui permet de répartir les efforts dans les points de soudure qui lient la traverse 22 au bras 12.

Toutefois, cette conception tend à soumettre la section S de chaque extrémité 28 de la traverse 22 à une sollicitation de gauchissement G, comme représenté par les flèches de la figure 2. Cette sollicitation G s'exerce transversalement suivant la direction T sur les branches du U de la section S et soumet les points de soudure (non représentés) qui lient la traverse 22 au bras 12 à des contraintes importantes. Cette sollicitation G est d'autant plus élevée que la section S considérée est située à proximité de l'extrémité 28 de la traverse 22.

De plus, lorsque l'essieu 10 est soumis aux différents efforts qui résultent du roulage du véhicule, cette sollicitation G est susceptible de devenir une sollicitation alternée.

En effet, il est connu que les roues 20 font entre elles, dans un plan horizontal, un angle déterminé appelé angle de pincement (non représenté). Cet angle varie en fonction des conditions de roulage du véhicule, notamment lorsque celui-ci est soumis à une forte accélération ou un freinage brutal. De la sorte, les bras 12 sont amenés au cours du roulage à transmettre aux extrémités 28 de la traverse les variations de l'angle de pincement des roues 20 et les points de soudure qui lient la traverse 22 au bras 12 sont ainsi susceptibles d'être sollicités alternativement.

Pour remédier à ces inconvénients, comme l'illustrent les figure 3 et 4, l'invention propose une traverse 22 dont chaque aile 24 et 26 comporte un bord libre respectif 30 et 32 qui, à chaque extrémité 28 de la traverse 22, est échancré suivant un arc C.

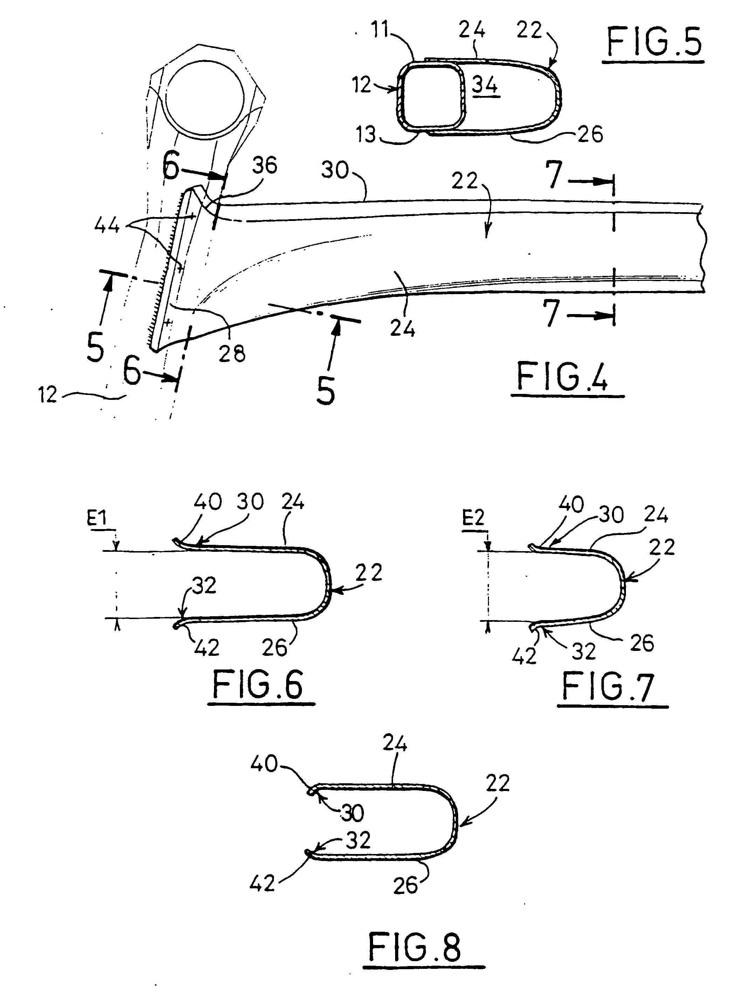

L'extrémité de la traverse 22 est représentée en coupe longitudinale à la figure 5. L'aile 24 supérieure et l'aile 26 qui forment les deux branches du U du profilé dans lequel est réalisée la traverse 22 et reçoivent de manière connue le bras 12. Une face inférieure 25 de l'aile 24 supérieure est fixée sur une face supérieure 11 du bras 12, et une face supérieure 27 de l'aile 26 inférieure est fixée sous une face inférieure 13 du bras 12. De la sorte, l'extrémité 28 de la traverse 22 forme une "pince" 34 dont les mors sont constitués de la face inférieure 25 de l'aile 24 et de la face supérieure de l'aile 26. Cette pince est représentée aussi à la figure 3.

Comme l'illustre la figure 3, chacun des bords libres 30 et 32 comporte, dans la zone d'extrémité 28 de la traverse 22, une échancrure respective associée 36 et 38.

Comme l'illustre la figure 4, le bord libre de chaque échancrure 36 ou 38 de courbure C est tangent à la direction T général transversale de la traverse 22 et est aussi tangent à la direction générale du bras 12 associé de façon à réduire localement la dimension longitudinale de l'aile 26 ou 28 et à créer ainsi une zone de raccordement dans laquelle les contraintes de gauchissement s'annulent. Sur la figure 4, on a représenté seulement l'aile supérieure 24 dont le bord libre 30 comporte l'échancrure 36 de courbure C qui est tangente à la fois à la direction transversale T de la traverse 22 et à la direction du bras 12 qui est associé à l'extrémité considérée 28 de la traverse.

À titre d'exemple, et de façon non limitative de l'invention, pour une traverse 22 d'une largeur transversale d'environ 1100 mm le rayon de la courbure C d'extrémité des bords libres 30 et 32 est de l'ordre de 16 mm.

Par ailleurs, conformément à l'invention, comme l'illustrent les figures 6, 7, et 8 les bords libres 30 et 32 respectifs des ailes 24 et 26 sont de surcroît recourbés de façon à être inclinés par rapport au plan de chaque aile 24 et 26.

Cette configuration permet avantageusement de rigidifier les bords 30 et 32 des ailes 24 et 26 au moins dans les zones respectives des échancrures 36 et 38 afin d'accroître la résistance de la traverse 22 dans cette zone de sollicitation maximale.

Comme l'illustrent les figures 6 et 7, selon un premier mode de réalisation de l'invention, les bords libres 30 et 32 des ailes 24 et 26 peuvent être recourbés, surtout la largeur transversale de la traverse 22, vers l'extérieur du U de la traverse 22.

En effet, la traverse 22 est réalisée à partir du tronçon de profilé décrit précédemment, qui, au début de son processus de fabrication présente une section constante en U du type de celle qui est représentée à la figure 7. Le profilé est ensuite déformé à froid dans une étape du début du processus de fabrication de la traverse 22 de façon que ses bords libres 30 et 32 restent rectilignes mais que les branches du U soient plus longues à ses extrémités 28 que dans sa partie médiane. L'arête 27 de la 22, qui est opposée aux bords libres 30 et 32, présente donc sensiblement, en fin du processus de fabrication de la traverse 22, une forme cintrée en arc de cercle C', comme illustré à la figure 3.

Dans un étape ultérieure du processus de fabrication de la traverse 22, celle ci est déformée à froid suivant la direction longitudinale, par exemple par emboutissage, de façon à replier sur toute sa largeur transversale ses bords libres 30 et 32 par rapport aux plans des ailes supérieure 24 et inférieure 26. De la sorte, les bords libres 30 et 32 des ailes supérieure 24 et inférieure 26 comportent des parties en repli 40 et 42 qui s'étendent sur toute la largeur transversale de la traverse 22 et qui contribuent à rigidifier la traverse 22.

Cette disposition n'est pas limitative de l'invention, et en variante, les replis 40 et 42 pourraient n'être réalisés qu'au voisinage des extrémités 28 de la traverse 22.

Les figures 6 et 7 illustrent un premier mode de réalisation de la traverse 22 dans lequel les parties en repli 40 et 42 sont tournés vers l'extérieur du U de la traverse 22. Cette disposition permet par exemple de disposer d'un espace libre à l'intérieur du U de la traverse 22, qui permet d'y disposer différents équipements, tels que des canalisations d'un circuit de freinage du véhicule.

La figure 8 illustre un second mode de réalisation de la traverse 22 dans lequel les parties en repli 40 et 42 sont tournés vers l'intérieur du U de la traverse 22. Cette disposition permet de disposer d'une traverse 22 qui est compacte dans la direction perpendiculaire aux plans des ailes 24 et 26.

Dans les deux modes de réalisation de la traverse 22, les parties en repli 40 et 42 sont préférablement soumises à un traitement destiné à accroître leur tenue à la fatigue. Ce traitement peut consister en un grenaillage, ou en un traitement d'écrouissage, notamment par galetage, qui permet aux parties en repli 40 et 42 des bords libres 30 et 32 de présenter les caractéristiques mécaniques requises à une bonne tenue en fatigue de la traverse 22.

Enfin, dans le cadre de l'invention, la traverse 22 peut être fixée de différentes façons aux bras 12. La traverse 22 peut être soudée de façon conventionnelle ou comporter des points 44 d'ancrage formés de perçages qui permettent d'introduire des vis (non représentées) coopérant avec des taraudages complémentaires (non représentés) des bras 12. La traverse 22 est dans ce cas démontable des bras 12, ce qui permet avantageusement son remplacement en cas de déformation, notamment suite à un accident.

Ainsi, l'essieu 10 selon l'invention comporte une traverse 22 de grande résistance, propre à assurer en toute sécurité, notamment dans le cadre d'une conduite sportive du véhicule au cours de laquelle la traverse 22 est fortement sollicitée, un maintien efficace des bras 12.

## Revendications

1. Essieu (10), notamment arrière, pour véhicule automobile, du type qui comporte au moins deux bras (12) sensiblement longitudinaux qui sont articulés autour d'un axe (A) transversal par rapport à un élément de structure de caisse du véhicule, du type dans lequel les bras (12) sont reliés l'un à l'autre par une traverse (22) transversale qui est fixée aux bras à ses extrémités (28) et qui présente des caractéristiques de raideur élevées en flexion et réduites en torsion, du type dans lequel la traverse (22) est formée de deux ailes (24, 26) réunies sensiblement, en section longitudinale, sous la forme d'un U,
**caractérisé en ce que** chaque aile (24, 26) de la traverse comporte un bord (30, 32) libre qui, à chaque extrémité de la traverse (22), est échancré suivant un arc (C) qui est tangent à la direction (T) générale transversale de la traverse (22) et qui est tangent à la direction (L) générale longitudinale du bras (12) associé de façon à réduire localement la dimension longitudinale de la branche du U et à créer ainsi une zone de raccordement dans laquelle les contraintes (G) de gauchissement s'annulent.

2. Essieu (10) selon la revendication précédente, **caractérisé en ce que** le bord (30, 32) libre de chaque aile (24, 26) de la traverse (22) est de surcroît recourbé par rapport au plan de chaque aile (24, 26).

3. Essieu (10) selon la revendication précédente, **caractérisé en ce que** le bord (24, 26) libre de chaque aile est recourbé vers l'extérieur de la traverse (22) en U.

4. Essieu (10) selon la revendication 2, **caractérisé en ce que** le bord libre (30, 32) de chaque aile (24, 26) est recourbé vers l'intérieur de la traverse (22) en U.

5. Essieu (10) selon l'une des revendications 3 ou 4, **caractérisé en ce que** , lors de la fabrication de la traverse (22), le bord libre (30, 32) de chaque aile (24, 26) est soumis à un traitement par grenaillage pour améliorer les caractéristiques de tenue en fatigue de la traverse (22).

6. Essieu (10) selon l'une des revendications 3 ou 4, **caractérisé en ce que** , lors de la fabrication de la traverse(22), le bord libre (30, 32) de chaque aile (24, 26) est soumis à un traitement par écrouissage, notamment par galetage; pour améliorer les caractéristiques de tenue en fatigue de la traverse (22).

7. Essieu (10) selon l'une quelconque des revendications précédentes, **caractérisé en ce que** la traverse (22) est évasée à chacune de ses extrémités (28), chaque branche du U de ses ailes (24, 26) étant de longueur croissante, du milieu de la traverse (22) jusqu'à la zone de raccordement de chacune de ses extrémités(28).

8. Essieu (10) selon l'une quelconque des revendications précédentes, **caractérisé en ce que** la traverse (22) est réalisée à partir d'un tronçon d'un profilé.

9. Essieu (10) selon les revendications 1 à 8, **caractérisé en ce que**, lors de la fabrication de la traverse, le profilé est déformé à froid pour réaliser les évasements, et/ou les échancrures (36, 38) et/ou les bords (30, 32) recourbés de ses ailes (24, 26).

10. Essieu (10) selon l'une quelconque des revendications précédentes, **caractérisé en ce que** la traverse (22) est soudée sur les bras (12).

11. Essieu selon l'une quelconque des revendications 1 à 9, **caractérisé en ce que** la traverse (22) est assemblée aux bras (12) par l'intermédiaire de points d'ancrage (44) démontables.

## Patentansprüche

1. Achse (10) für ein Kraftfahrzeug, insbesondere hintere Achse, von der Art, welche mindestens zwei im Wesentlichen longitudinale Arme (12) aufweist, welche um eine Achse (A) transversal im Verhältnis zu einem Element der Karrosseriestruktur des Fahrzeugs angelenkt sind, von der Art, bei welcher die Arme (12) über einen transversalen Querträger (22) miteinander verbunden sind, welcher an den Armen an ihren Enden (28) befestigt ist, und welcher in Biegung erhöhte und in Torsion reduzierte Steifigkeitseigenschaften aufweist, von der Art, bei welcher der Querträger (22) aus zwei Flügeln (24, 26) gebildet ist, die in Längsschnitt im Wesentlichen in Form eines U zusammengefügt sind,
**dadurch gekennzeichnet, dass** jeder Flügel (24, 26) des Querträgers einen freien Rand (30, 32) aufweist, welcher an jedem Ende des Querträgers (22) gemäß einem Bogen (C) gebogen ist, welcher mit der allgemeine transversalen Richtung (T) des Querträgers (22) in Tangente kommt und welcher mit der allgemeinen longitudinalen Richtung (L) des zugehörigen Arms (12) in einer Weise in Tangente kommt, um lokal die longitudinale Abmessung des Schenkels des U zu reduzieren und somit eine Verbindungszone zu erzeugen, in welcher sich die Spannungen (G) der Verwindung aufheben.

2. Achse (10) nach dem vorhergehenden Anspruch, **dadurch gekennzeichnet, dass** der freie Rand (30, 32) jedes Flügels (24, 26) des Querträgers (22) zusätzlich im Verhältnis zur Ebene jedes Flügels (24, 26) gekrümmt ist.

3. Achse (10) nach dem vorhergehenden Anspruch, **dadurch gekennzeichnet, dass** der freie Rand (24, 26) jedes Flügels in Richtung zur Außenseite des U-förmigen Querträgers (22) gekrümmt ist.

4. Achse (10) nach Anspruch 2, **dadurch gekennzeichnet, dass** der freie Rand (30, 32) jedes Flügels (24, 26) in Richtung zur Innenseite des U-förmigen Querträgers (22) gekrümmt ist.

5. Achse (10) nach einem der Ansprüche 3 oder 4, **dadurch gekennzeichnet, dass** während der Herstellung des Querträgers (22) der freie Rand (30, 32) jedes Flügels (24, 26) einer Behandlung durch Strahlverfestigen ausgesetzt ist, um die Eigenschaften einer Haltbarkeit des Querträgers (22) gegen Ermüdung zu verbessern.

6. Achse (10) nach einem der Ansprüche 3 oder 4, **dadurch gekennzeichnet, dass** bei der Herstellung des Querträgers (22) der freie Rand (30, 32) jedes Flügels (24, 26) einer Behandlung durch Kaltverfestigung, insbesondere durch Walzen, ausgesetzt wird, um die Eigenschaften der Haltbarkeit des Querträgers (22) gegen Ermüdung zu verbessern.

7. Achse (10) nach irgendeinem der vorhergehenden Ansprüche, **dadurch gekennzeichnet, dass** der Querträger (22) an jedem seiner Enden (28) aufgeweitet ist, wobei jeder Schenkel des U seiner Flügel (24, 26) von einer von der Mitte des Querträgers (22) bis zur Verbindungszone jedes seiner Enden (28) zunehmenden Länge ist.

8. Achse (10) nach irgendeinem der vorhergehenden Ansprüche, **dadurch gekennzeichnet, dass** der Querträger (22) aus einem Stück eines Profils realisiert ist.

9. Achse (10) nach den Ansprüchen 1 bis 8, **dadurch gekennzeichnet, dass** bei der Herstellung des Querträgers das Profil kalt verformt wird, um die Ausweitungen und/oder die Ausschnitte (36, 38) und/oder die gekrümmten Ränder (30, 32) seiner Flügel (24, 26) zu realisieren.

10. Achse (10) nach irgendeinem der vorhergehenden Ansprüche, **dadurch gekennzeichnet, dass** der Querträger (22) an den Armen (12) angeschweißt ist.

11. Achse nach irgendeinem der Ansprüche 1 bis 9, **dadurch gekennzeichnet, dass** der Querträger (22) an den Armen (12) mittels demontierbarer Verankerungspunkte (44) zusammengefügt ist.

## Claims

1. An axle (10), in particular a rear axle, for a motor vehicle, of the type which comprise a least two substantially longitudinal arms (12) which are pivoted about a transverse axis (A) with respect to a bodywork structural element of the vehicle, of the type in which the arms (12) connected to each other by a transverse cross member (22) which is fixed to the arms at its ends (28) and which has stiffness characteristics which are elevated in respect of flexure and reduced in respect of torsion, of the type in which the cross member (22) is formed by two limbs (24, 26) joined substantially in longitudinal section in the form of a U-shape,
**characterised in that** each limb (24, 26) of the cross member comprises a free edge (30, 32) which, at each end of the cross member (22), is recessed along an arc (C) which is tangential to the general transverse direction (T) of the cross member (22) and which is tangential to the general longitudinal direction (L) of the associated arm (12) so as to locally reduce the longitudinal dimension of the arm of the U and thus to create a connecting zone in which the warping stresses (G) cancel each other out.

2. An axle (10) according to the preceding claim **characterised in that** the free edge (30, 32) of each limb (24, 26) of the cross member (22) is in addition curved with respect to the plane of each limb (24, 26).

3. An axle (10) according to the preceding claim **characterised in that** the free edge (24, 26) of each limb is curved outwardly of the U-shaped cross member (22).

4. An axle (10) according to claim 2 **characterised in that** the free edge (30, 32) of each limb (24, 26) is curved inwardly of the U-shaped cross member (22).

5. An axle (10) according to one of claims 3 and 4 **characterised in that**, in production of the cross member (22), the free edge (30, 32) of each limb (24, 26) is subjected to a shot blasting treatment to improve the fatigue strength characteristics of the cross member (22).

6. An axle (10) according to one of claims 3 and 4 **characterised in that**, in production of the cross member (22), the free edge (30, 32) of each limb (24, 26) is subjected to a work hardening treatment, in particular by rolling; to improve the fatigue strength characteristics of the cross member (22).

7. An axle (10) according to any one of the preceding claims **characterised in that** the cross member (22) is flared at each of its ends (28), each arm of the U-shape of its limb (24, 26) being of an increasing length from the middle of the cross member (22) to the connecting zone of each of its ends (28).

8. An axle (10) according to any one of the preceding claims **characterised in that** the cross member (22) is made from a portion of a profiled member.

9. An axle (10) according to claims 1 to 8 **characterised in that**, in production of the cross member, the profiled member in the condition to produce the flare configurations and/or the recesses (36, 38) and/or the curved edges (30, 32) of its limbs (24, 26).

10. An axle (10) according to any one of the preceding claims **characterised in that** the cross member (22) is welded to the arms (12).

11. An axle according to any one of claims 1 to 9 **characterised in that** the cross member (22) is assembled to the arms (12) by way of dismantleable anchorage points (44).
